# EUROPEAN PATENT APPLICATION

(11) **EP 3 793 151 A1**
(43) Date of publication of application: **17.03.2021**
(21) Application number: 18918026.8
(22) Date of filing: 11.05.2018
(51) Int. Cl.: H04L 27/26

(54) **USER TERMINAL AND WIRELESS BASE STATION**

(71) Applicant: NTT DOCOMO, INC., Chiyoda-ku Tokyo 100-6150 (JP)
(72) Inventor: MURAYAMA, Daisuke, Tokyo 100-6150 (JP); HARADA, Hiroki, Tokyo 100-6150 (JP); TAKEDA, Kazuaki, Tokyo 100-6150 (JP); NAGATA, Satoshi, Tokyo 100-6150 (JP)
(74) Representative: Hoffmann Eitle
(86) International application number: PCT/JP2018/018360
(87) International publication number: WO 2019/215920

(57) **Abstract**

A user terminal of the present invention includes a receiving section that receives system information including an index value indicating a first offset value that is a value based on a certain bandwidth or zero, and a control section that determines frequency resources for an uplink control channel, based on the first offset value, the frequency resources frequency-hopping in the certain bandwidth.

## Description

### Technical Field

The present invention relates to a user terminal and a radio base station in next-generation mobile communication systems.

### Background Art

In UMTS (Universal Mobile Telecommunications System) networks, the specifications of Long Term Evolution (LTE) have been drafted for the purpose of further increasing high speed data rates, providing lower latency, and so on (see Non-Patent Literature 1). In addition, for the purpose of achieving broadbandization and increased speed beyond LTE, successor systems of LTE (referred to as, for example, "LTE-A (LTE-Advanced)," a "FRA (Future Radio Access)," "4G," "5G," "5G+ (plus)," "NR (New RAT)," "LTE Rel. 15" (or later versions), and so on) are also under study.

In existing LTE systems (for example, LTE Rel. 8 to Rel. 13), communication of a downlink (DL) and/or an uplink (UL) is performed by using a subframe of 1 ms (also referred to as a transmission time interval (TTI) or the like). The subframe is a transmission time unit of one data packet coded by channel coding, and is a processing unit of scheduling, link adaptation, retransmission control (HARQ (Hybrid Automatic Repeat reQuest)), and so on.

In the existing LTE systems (for example, LTE Rel. 8 to Rel. 13), a user terminal transmits uplink control information (UCI) on an uplink control channel (for example, PUCCH (Physical Uplink Control Channel)) or an uplink shared channel (for example, PUSCH (Physical Uplink Shared Channel)). A structure (format) of the uplink control channel is referred to as a "PUCCH format" and the like.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is studied for future radio communication systems (for example, LTE Rel. 15 (or later versions), 5G, 5G+, NR, and the like) to use not only licensed carriers but also unlicensed carriers for communication. Since an unlicensed carriers is a band shared by a plurality of providers, listening for checking whether there is transmission by another apparatus (for example, a radio base station, a user terminal, Wi-Fi apparatus, or the like) (also referred to as "LBT (Listen Before Talk)," "CCA (Clear Channel Assessment)," "carrier sense," "channel access procedure," and the like) is performed before transmission of a signal on an unlicensed carrier.

Some countries, areas, and the like have certain regulations for the use of such a carrier requiring listening before transmission (unlicensed carrier). For example, by European Telecommunications Standards Institute (ETSI), regulations of an occupied channel bandwidth (OCB) and a maximum transmission power density (PSD (Power Spectral Density) are established.

However, in the future radio communication systems, a format (transmission method) of an uplink control channel (PUCCH (Physical Uplink Control Channel)) to be used for transmission of UCI may not satisfy the certain regulations of the unlicensed carrier.

The present invention has been made in view of the above described respects, and an object of the present invention is to provide a user terminal and a radio base station that can appropriately control transmission of an uplink control channel in a carrier requiring listening before transmission. Solution to Problem

A user terminal according to an aspect of the present invention includes a transmitting section that transmits an uplink control channel in a carrier for which listening is performed before transmission, and a control section that determines frequency resources that are to be allocated to the uplink control channel and distributed in a certain bandwidth.

### Advantageous Effects of Invention

According to the present invention, it is possible to appropriately control transmission of an uplink control channel in a carrier requiring listening before transmission.

### Brief Description of Drawings

FIG. 1 is a diagram to show an example of PUCCH formats (PFs) ;
FIG. 2 is a diagram to show an example of interlaced transmission;
FIG. 3 is a diagram to show an example of RMSI indices indicating a cell-specific PRB offset of four values according to a first aspect;
FIG. 4 is a diagram to show an example of frequency hopping of a long PUCCH according to a second aspect;
FIG. 5 is a diagram to show an example of interlaced transmission of a long PUCCH according to a third aspect;
FIG. 6 is a diagram to show an example of a schematic structure of a radio communication system according to the present embodiment;
FIG. 7 is a diagram to show an example of an overall structure of a radio base station according to the present embodiment;
FIG. 8 is a diagram to show an example of a functional structure of the radio base station according to the present embodiment;
FIG. 9 is a diagram to show an example of an overall structure of a user terminal according to the present embodiment;
FIG. 10 is a diagram to show an example of a functional structure of the user terminal according to the present embodiment; and
FIG. 11 is a diagram to show an example of a hardware structure of the radio base station and the user terminal according to the present embodiment.

### Description of Embodiments

For future radio communication systems (for example, LTE Rel. 15 (or later versions), 5G, NR, and the like), structures (also referred to as "formats," "PUCCH formats (PFs)," and the like) for an uplink control channel (for example, PUCCH) to be used for transmission of UCI are studied. For example, for LTE Rel. 15, it is studied to support five types of PFs, i.e., PF0 to PF4. Note that terms of PFs to be shown below are merely examples, and different terms may be used.

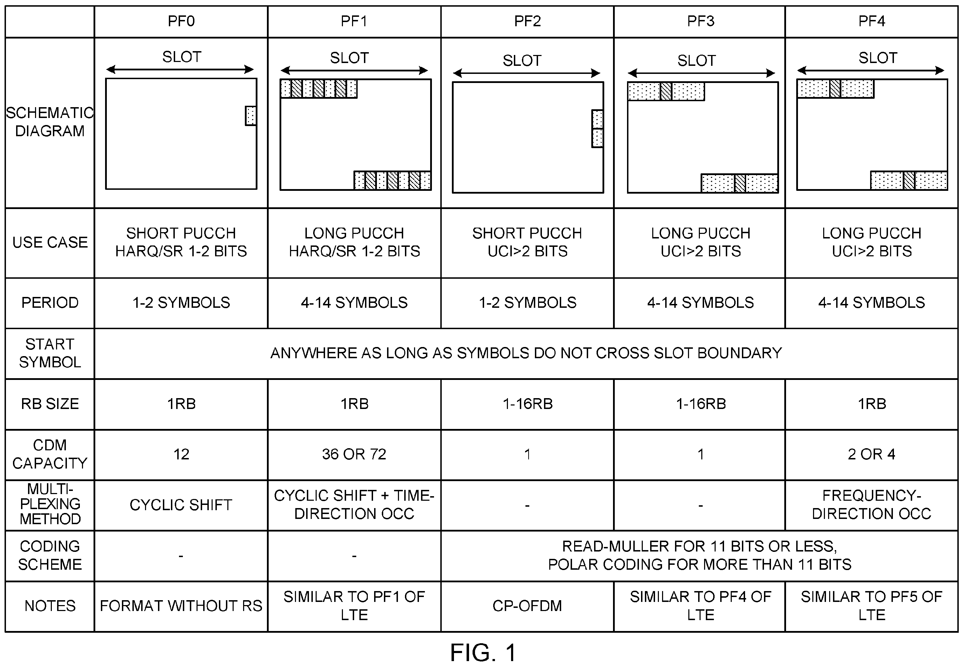

FIG. 1 is a diagram to show an example of PUCCH formats (PFs). As shown in FIG. 1, PF0 and PF1 are PFs used for transmission of UCI of up to 2 bits (for example, at least one of transmission confirmation information (also referred to as "HARQ-ACK (Hybrid Automatic Repeat reQuest-Acknowledge)," "ACK" or "NACK," and the like) and a scheduling request (SR)).

PF0 allows allocation to one or two symbols and is hence also referred to as a "short PUCCH," a "sequence-based short PUCCH," and the like. In contrast, PF1 allows allocation to 4 to 14 symbols and is hence referred to also as a "long PUCCH" and the like. In PF0 and PF1, by block-wise spreading of a time domain using at least one of cyclic shift (CS) and orthogonal cover code (OCC), a plurality of user terminals may be code-division-multiplexed (CDM) in the same physical resource block (also referred to as "PRB," "resource block (RB)," and the like).

PF2 to PF4 are PFs used for transmission of UCI of more than 2 bits (for example, channel state information (CSI) (or CSI and HARQ-ACK and/or a scheduling request (SR))). PF2 allows allocation to one or two symbols and is hence also referred to as a "short PUCCH" and the like. In contrast, FP3 and PF 4 allow allocation to 4 to 14 symbols and are hence each also referred to as a "long PUCCH" and the like. In PF3, by using block-wise spreading of (a frequency domain) before DFT, a plurality of user terminals may be multiplexed in CDM.

Note that the period, the position of a start symbol, the number of resource blocks (RB size), the maximum number of user terminals to be code-division-multiplexed (CDM capacity), the method of multiplexing user terminals, the coding scheme, and the like of each PF shown in FIG. 1 are merely examples and are not limited to those shown in FIG. 1.

It is studied for the future radio communication systems to use not only licensed carriers but also unlicensed carriers for communication. A licensed carrier is a carrier of frequencies specifically allocated to one provider. In contrast, an unlicensed carrier is a carrier of frequencies shared by a plurality of providers or RATs.

A licensed carrier is also referred to as a "component carrier (CC)," a "cell," a "primary cell (PCell)," a "secondary cell (SCell)," a "primary secondary cell (PSCell)," and the like. An unlicensed carrier is also referred to as an "NR-U (NR-Unlicensed)," a "CC," an "unlicensed CC," a "cell," an "LAA SCell (License-Assisted Access SCell)," and the like.

In an unlicensed carrier, listening for checking whether there is transmission by another apparatus (for example, a radio base station, a user terminal, Wi-Fi apparatus, or the like) is performed before transmission of a signal. Listening is also referred to as "LBT (Listen Before Talk)," "CCA (Clear Channel Assessment)," "carrier sense," "channel access procedure," and the like. Moreover, in an unlicensed carrier, an access scheme with contention control (also referred to as "Receiver assisted access," "Receiver assisted LBT," and the like) may be employed.

In a case of using an unlicensed carrier, a certain regulation need to be satisfied. For example, according to regulations by European Telecommunications Standards Institute (ETSI), an occupied channel bandwidth (OCB) having 99% of a signal power for the use of 5 GHz, which is a possible unlicensed carrier, must be a bandwidth of 80% or more of a system bandwidth. Moreover, regulations related to a maximum transmission power density (PSD (power spectral density)) per certain bandwidth (1 MHz) are specified.

However, if the PUCCH formats in the future radio communication systems (for example, PF0 to PF 4 in FIG. 1) are used for an unlicensed carrier without any modification, the frequency bandwidth to be occupied may be narrow, which may fail to satisfy the regulations of OCB (OCB regulations).

Specifically, in a long PUCCH (for example, PF1, PF3, and PF4 in FIG. 1), two-hop frequency hopping is employed by using a certain number of resource blocks (RBs) in each of two end regions of a certain band (for example, a system band). In each hop, signal transmission is performed in a narrow band, which may fail to satisfy the above-described OCB regulations. In terms of one slot, although the OCB regulations may be satisfied, power is concentrated on a narrow band, which may restrict transmission power due to regulations of PSD.

In view of these, the inventors of the present invention came up with the idea of extending PUCCH formats in the future radio communication systems (for example, PF0 to PF4 in FIG. 1) so as to satisfy a regulation for an unlicensed carrier (for example, at least one regulation on bandwidth of the OCB and PSD) in an unlicensed carrier.

Specifically, the inventors of the present invention came up with the idea of enabling transmission of a PUCCH in an unlicensed carrier in a wide band, in at least one of the following ways:
- employing interlaced transmission for at least one of a short PUCCH and a long PUCCH (first and third aspects)
- increasing the number of hops in frequency hopping for a long PUCCH (second aspect) and
- employing repeated transmission in the frequency direction for at least one of a short PUCCH and a long PUCCH (other aspects).

The present embodiment will be described in detail as follows. Note that, although a description will be given below by taking an unlicensed carrier as an example, PUCCHs (PFs) described in the present embodiment may be applied to a licensed carrier. More generally, the present invention may be applied to a carrier requiring listening before transmission (carrier for which listening is configured), or may be applied to a carrier not requiring listening before transmission (carrier for which listening is not configured).

### (First Aspect)

In a first aspect, a user terminal supports interlaced transmission of a short PUCCH while not supporting interlaced transmission of a long PUCCH, in an unlicensed carrier. This is because a long PUCCH, which involves a longer period than that for a short PUCCH, is more likely to be affected by interference from other systems (for example, Wi-Fi apparatus) than a short PUCCH.

Here, the interlaced transmission may also be referred to as "RB-level multi-cluster transmission," "block IFDMA (Block Interleaved Frequency Division Multiple Access)," and the like. One interlace may be defined as a set of a plurality of frequency units allocated at a certain frequency spacing (for example, at 10 RB spacing) (which may be referred to as an "RB set"). Alternatively, one interlace may be defined as a resource set mapped by using the same resource (RB or cluster) pattern in every certain range (for example, 10 RBs) in the frequency direction.

Each of frequency units included in one interlace and distributed in the frequency direction may be referred to as a "cluster." One cluster may be constituted of one or more consecutive RBs, subcarriers, resource block groups, or the like. Note that, although it is assumed that frequency hopping is not employed in a cluster, the frequency hopping may be employed in a cluster.

A description will be given below by assuming that the bandwidth of an unlicensed carrier is, for example, 20 MHz (100 RBs) and that an interlace is a set of 10 RBs allocated at 10 RB spacing in a distributed manner in a system bandwidth. However, the bandwidth of the unlicensed carrier and the configuration of the interlace are not limited thereto.

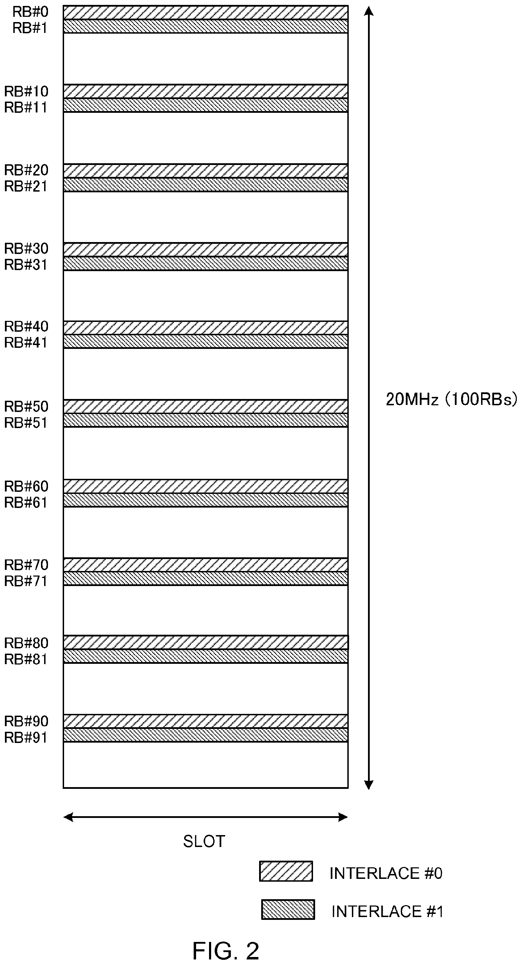

FIG. 2 is a diagram to show an example of interlaced transmission. For example, in FIG. 2, the system band is 20 MHz (100 resource blocks), and interlace #i is constituted of 10 resource blocks (clusters) having index values of {i, i+10, i+20, ..., i+90}.

As shown in FIG. 2, in a case that an uplink system band is constituted of 20 MHz (100 resource blocks), 10 interlaces #0 to #9 are provided. For a user terminal, one or more interlaces may be allocated as a resource(s) for a PUCCH (PUCCH resource(s)).

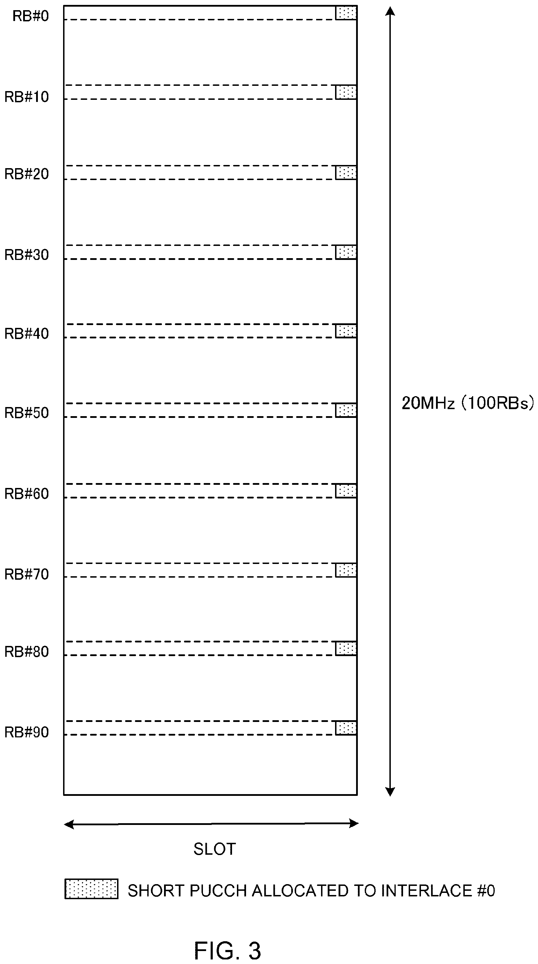

FIG. 3 is a diagram to show an example of interlaced transmission of a short PUCCH according to the first aspect. In FIG. 3, interlace #0 is allocated to a short PUCCH. For example, in FIG. 3, each interlace is constituted by including 10 RBs (clusters) at 10 RB spacing. As shown in Fig. 3, interlace #0 allocated to the short PUCCH includes RBs #0, #10, ..., and #90.

For example, FIG. 3 illustrates a case where a single interlace is allocated to a single short PUCCH (PF2 in FIG. 1) to which a plurality of RBs are allocated. The short PUCCH may be mapped in a distributed manner to 10 clusters (10 RBs) in the interlace.

Note that, although not shown, one or more interlaces may be allocated to the single short PUCCH.

A demodulation reference signal (DMRS) for the short PUCCH may be mapped to a certain number of subcarriers in each cluster in FIG. 3. Allocating the DMRS to each cluster enables appropriate demodulation of the short PUCCH for interlaced transmission on a radio base station side. In a case of a short PUCCH of one symbol, CP-OFDM (Cyclic Prefix-Orthogonal Frequency Division Multiplexing) may be performed on the short PUCCH, and the DMRS and UCI may be frequency-division-multiplexed on the short PUCCH.

In contrast, in a case of a short PUCCH of a plurality of symbols, the DMRS and the UCI may be time-division-multiplexed using the plurality of symbols. In this case, DFT-spread-OFDM (DFT-s-OFDM (Discrete Fourier Transform-Spread-OFDM)) may be performed on the short PUCCH.

A single interlace may be allocated to a plurality of short PUCCHs (PF0 in FIG. 1) to which a single RB is allocated. The plurality of short PUCCHs may be mapped to the respective clusters in the interlace. The plurality of short PUCCHs may be repetitions of a short PUCCH transmitting the same UCI or may be a plurality of short PUCCHs transmitting different pieces of UCI.

The user terminal may be configured (notified) of information related to an interlaced structure (interlace structure information) by at least one of higher layer signaling and physical layer signaling (for example, DCI). The interlace structure information may include information related to, for example, at least one of frequency spacing of RBs to be used, the number of RBs to be used, a bandwidth per cluster, and the like.

Here, higher layer signaling may be RRC (Radio Resource Control) signaling, broadcast information (master information block (MIB), system information blocks (SIBs), and so on), MAC (Medium Access Control) signaling, and other signals or combinations of these.

The user terminal may determine an interlace(s) to be allocated to the short PUCCH, based on the DCI. Interlaced transmission of a short PUCCH may be trigged by DCI.

The user terminal may determine whether to configure interlaced transmission for the short PUCCH, by at least one of higher layer signaling and physical layer signaling (for example, DCI) .

In the first aspect, interlaced transmission is employed for a short PUCCH but is not employed for a long PUCCH. By thus employing interlaced transmission for a short PUCCH, a certain regulation can be satisfied in an unlicensed carrier, for a short PUCCH, which is less likely to be affected by interference from other systems (for example, Wi-Fi apparatus).

### (Second Aspect)

As described with reference to FIG. 1, the number of hops in frequency hopping for a long PUCCH (for example, PF1, PF3, and PF4 in FIG. 1) is two under current circumstances. In a second aspect, PF1, PF3, and PF4 may be extended to increase the number of hops for the long PUCCH to be greater than two.

Specifically, in the second aspect, the number of hops (also referred to as the "number of hoppings" and the like) of the frequency resource (for example, one or more RBs) for a long PUCCH may be defined based on the number of RBs (clusters) included in one interlace. For example, the number of hops may be n times, 2^n times, or 1/n times (n is an integer) the number of clusters (10 in FIGS. 2 and 3) in one interlace. Note that the number of hops may be a value defined irrespective of the number of clusters. For example, the number of hops of frequency resource for a long PUCCH may be 10, 20, 40, or 80.

Hopping interval (also referred to as a "frequency offset," "hopping offset," "offset," and the like) of frequency hopping may be, for example, 10 RBs, 20 RBs, and the like. Hopping intervals are desirably equal but may not necessarily be equal to each other among hops. The hopping intervals may be determined based on the bandwidth available for the user terminal (the bandwidth of an unlicensed carrier, a system bandwidth, a bandwidth part (BWP), or the like) and the number of hops. For example, each hopping interval may correspond to the number of RBs determined based on a multiplication result of the available bandwidth and the number of hops (in an indivisible case, a value obtained by rounding up or rounding off, or a close integer value).

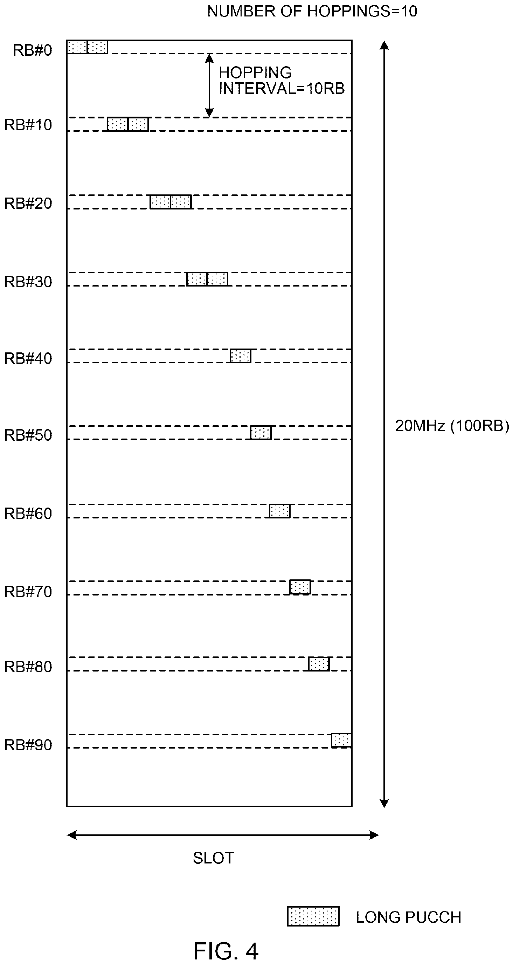

FIG. 4 is a diagram to show an example of frequency hopping of a long PUCCH according to the second aspect. For example, FIG. 4 illustrates an example of a case where the number of hops of frequency hopping of a long PUCCH is 10. Note that, since hops of only one symbol are also included in FIG. 4, a DMRS and UCI may be frequency-division-multiplexed in the frequency resource of each hop through CP-OFDM.

Note that, although not shown, the period of a long PUCCH in the second aspect may be extended to one slot or more. This allows each hop to include a plurality of symbols even when the number of hops is 10 or more. In this case, since a DMRS and UCI can be time-division-multiplexed in each hop, DFT-spread-OFDM can be employed.

The user terminal may be configured (notified) of information related to frequency hopping (frequency hopping information) by at least one of higher layer signaling and physical layer signaling (for example, DCI). The frequency hopping information may include information related to at least one of the number of hops, hopping intervals, and the like, for example.

In the second aspect, even in a case where interlaced transmission is not employed for a long PUCCH, broadbandization of the long PUCCH can be achieved. Hence, it is possible to satisfy a certain regulation in an unlicensed carrier even without employing interlaced transmission for a long PUCCH.

### (Third Aspect)

In a third aspect, the user terminal may support interlaced transmission of a long PUCCH in addition to a short PUCCH, in an unlicensed carrier. Interlaced transmission of a short PUCCH is as described in the first aspect. A description will be mainly given of differences from the first aspect.

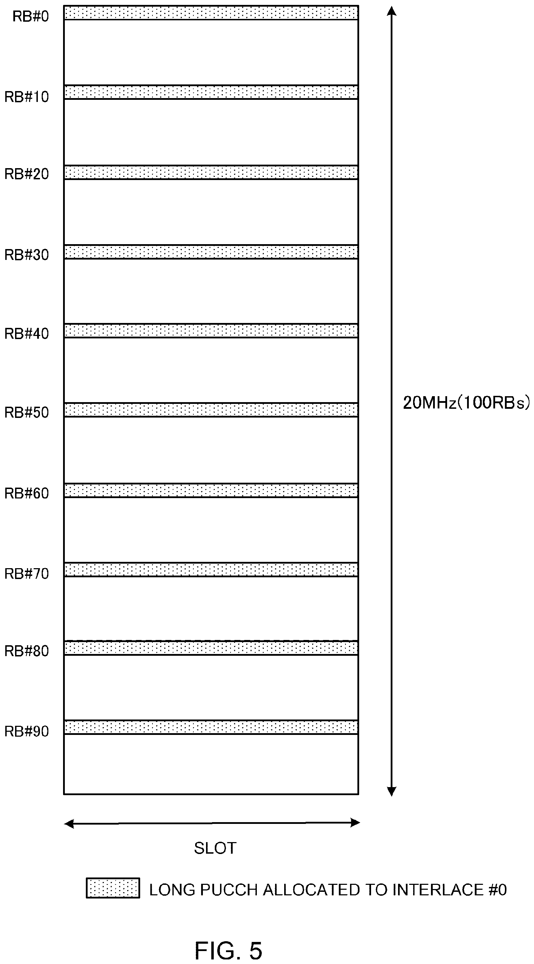

FIG. 5 is a diagram to show an example of interlaced transmission of a long PUCCH according to the third aspect. In FIG. 5, interlace #0 is allocated to a long PUCCH. For example, in FIG. 5, each interlace is constituted by including 10 RBs (clusters) at 10 RB spacing. As shown in Fig. 5, interlace #0 allocated to the long PUCCH includes RBs #0, #10, ..., and #90.

For example, FIG. 5 illustrates a case where a single interlace is allocated to a single long PUCCH (PF3 in FIG. 1) to which a plurality of RBs are allocated. The long PUCCH may be mapped in a distributed manner to 10 clusters (10 RBs) in the interlace. Note that, although not shown, one or more interlaces may be allocated to the single long PUCCH.

In each cluster in FIG. 5, a DMRS and UCI of the long PUCCH may be time-division-multiplexed. In this case, DFT-spread-OFDM may be employed for the long PUCCH.

A single interlace may be allocated to a plurality of long PUCCHs (PF1 and PF4 in FIG. 1) to which a single RB is allocated. The plurality of long PUCCHs may be mapped to the respective clusters in the interlace. The plurality of long PUCCHs may be repetitions of a long PUCCH transmitting the same UCI or may be a plurality of long PUCCHs transmitting different pieces of UCI.

The user terminal may determine an interlace(s) to be allocated to the long PUCCH, based on the DCI. The user terminal may determine whether to configure interlaced transmission for the long PUCCH, by at least one of higher layer signaling and physical layer signaling (for example, DCI).

In the third aspect, interlaced transmission can be employed for both a short PUCCH and a long PUCCH. Hence, it is possible to satisfy a certain regulation in an unlicensed carrier for both a short PUCCH and a long PUCCH.

### (Other Aspects)

For a short PUCCH and a long PUCCH of a single PRB, repeated transmission may be performed in a plurality of clusters in one interlace as described above. Alternatively, repeated transmission may be performed in a plurality of PRBs scheduled separately from interlace.

### (Radio Communication System)

Hereinafter, a structure of a radio communication system according to the present embodiment will be described. In this radio communication system, the radio communication method according to each aspect described above is employed. Note that the radio communication method according to each aspect described above may be employed independently or at least two of the radio communication methods may be employed in combination.

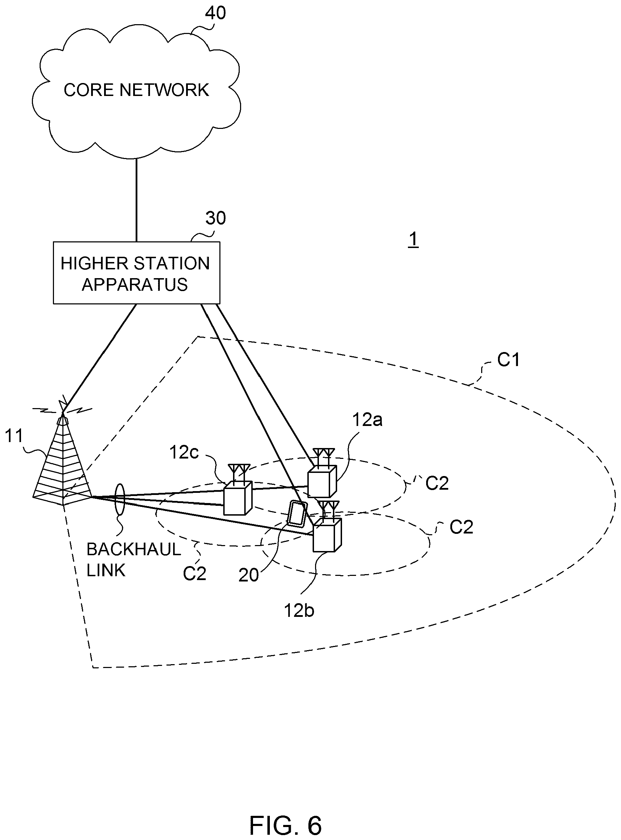

FIG. 6 is a diagram to show an example of a schematic structure of a radio communication system according to the present embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit. Note that the radio communication system 1 may be referred to as "SUPER 3G," "LTE-A (LTE-Advanced)," "IMT-Advanced," "4G," "5G," "FRA (Future Radio Access)," "NR (New RAT: New Radio Access Technology)," and the like.

The radio communication system 1 shown in FIG. 6 includes a radio base station 11 that forms a macro cell C1 and radio base stations 12a to 12c that form small cells C2, which are placed within the macro cell C1 and are narrower than the macro cell C1. Also, user terminals 20 are placed in the macro cell C1 and in each small cell C2. A structure of employing different numerologies for cells and/or within a cell may be employed.

Here, a numerology is a communication parameter in the frequency direction and/or time direction (for example, at least one of spacing of subcarriers (subcarrier spacing), bandwidth, symbol length, CP time length (CP length), subframe length, TTI time length (TTI length), the number of symbols per TTI, radio frame structure, filtering process, windowing process, and so on). The radio communication system 1 may, for example, support subcarrier spacing, such as 15 kHz, 30 kHz, 60 kHz, 120 kHz, and 240 kHz.

The user terminals 20 can connect with both the radio base station 11 and the radio base stations 12. It is assumed that the user terminals 20 use the macro cell C1 and the small cells C2, which use different frequencies, at the same time by CA or DC. The user terminals 20 may adopt CA or DC by using a plurality of cells (CCs) (for example, two or more CCs). The user terminals can use a licensed band CC and an unlicensed band CC as the plurality of cells.

The user terminals 20 can perform communication by using time division duplex (TDD) or frequency division duplex (FDD) in each cell. A TDD cell may be referred to as a "TDD carrier (frame structure type 2)" and the like, and an FDD cell may be referred to as an "FDD carrier (frame structure type 1)" and the like.

Furthermore, in each cell (carrier), a single numerology may be employed, or a plurality of different numerologies may be employed.

Between the user terminals 20 and the radio base station 11, communication can be carried out by using a carrier of a relatively low frequency band (for example, 2 GHz) and a narrow bandwidth (referred to as, for example, an "existing carrier," a "Legacy carrier," and so on). Meanwhile, between the user terminals 20 and the radio base stations 12, a carrier of a relatively high frequency band (for example, 3.5 GHz, 5 GHz, 30 GHz to 70 GHz, and so on) and a wide bandwidth may be used, or the same carrier as that used between the user terminals 20 and the radio base station 11 may be used. Note that the structure of the frequency band for use in each radio base station is by no means limited to these.

A configuration of a wired connection (for example, means in compliance with the CPRI (Common Public Radio Interface) such as an optical fiber, an X2 interface, and so on) or a wireless connection may be established between the radio base station 11 and the radio base stations 12 (or between two radio base stations 12) .

The radio base station 11 and each radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME), and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "aggregate node," an "eNB (eNodeB)," a "gNB (gNodeB)," a "transmitting/receiving point (TRP)," and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "eNBs," "gNBs," "transmitting/receiving points," and so on. Hereinafter, the radio base stations 11 and 12 will be collectively referred to as "radio base stations 10," unless specified otherwise.

Each user terminal 20 is a terminal that supports various communication schemes such as LTE, LTE-A, 5G, and NR and may include not only mobile communication terminals but fixed communication terminals. Each of the user terminals 20 can perform device-to-device communication (D2D) with the other user terminals 20.

In the radio communication system 1, as radio access schemes, OFDMA (orthogonal frequency division multiple access) is applied to the downlink (DL), and SC-FDMA (single carrier frequency division multiple access) is applied to the uplink (UL). OFDMA is a multi-carrier transmission scheme to perform communication by dividing a frequency band into a plurality of narrow frequency bands (subcarriers) and mapping data to each subcarrier. SC-FDMA is a single carrier transmission scheme to mitigate interference between terminals by dividing the system bandwidth into bands each constituted of one or continuous resource blocks per terminal and allowing a plurality of terminals to use mutually different bands. Note that the uplink and downlink radio access schemes are by no means limited to the combinations of these, and OFDMA may be used in UL.

In the radio communication system 1, a multi-carrier waveform (for example, an OFDM waveform) may be used, or a single carrier waveform (for example, a DFT-s-OFDM waveform) may be used.

In the radio communication system 1, a DL shared channel (also referred to as a "PDSCH (Physical Downlink Shared Channel)," a "DL data channel," and the like), which is used by each user terminal 20 on a shared basis, a broadcast channel (PBCH (Physical Broadcast Channel)), L1/L2 control channels, and so on, are used as DL channels. User data, higher layer control information, SIBs (System Information Blocks), and so on are communicated on the PDSCH. The MIBs (Master Information Blocks) are communicated on the PBCH.

The L1/L2 control channels include a DL control channel (PDCCH (Physical Downlink Control Channel), an EPDCCH (Enhanced Physical Downlink Control Channel)), a PCFICH (Physical Control Format Indicator Channel), a PHICH (Physical Hybrid-ARQ Indicator Channel), and so on. Downlink control information (DCI) including PDSCH and PUSCH scheduling information and so on are communicated on the PDCCH. The number of OFDM symbols to be used for the PDCCH is communicated on the PCFICH. The EPDCCH is frequency-division-multiplexed with the PDSCH and used to communicate DCI and so on, like the PDCCH. HARQ retransmission control information (ACK/NACK) for the PUSCH can be communicated on at least one of the PHICH, PDCCH, and EPDCCH.

In the radio communication system 1, a UL shared channel (also referred to as "PUSCH (Physical Uplink Shared Channel)," an "uplink shared channel," and the like)), which is shared by each user terminal 20 on a shared basis, an uplink control channel (PUCCH (Physical Uplink Control Channel)), a random access channel (PRACH (Physical Random Access Channel)), and so on are used as UL channels. User data and higher layer control information are communicated on the PUSCH. Uplink control information (UCI) including at least one of retransmission control information (A/N), channel state information (CSI), and the like of a DL signal is communicated on the PUSCH or PUCCH. By means of the PRACH, random access preambles for establishing connections with cells can be communicated.

### <Radio Base Station>

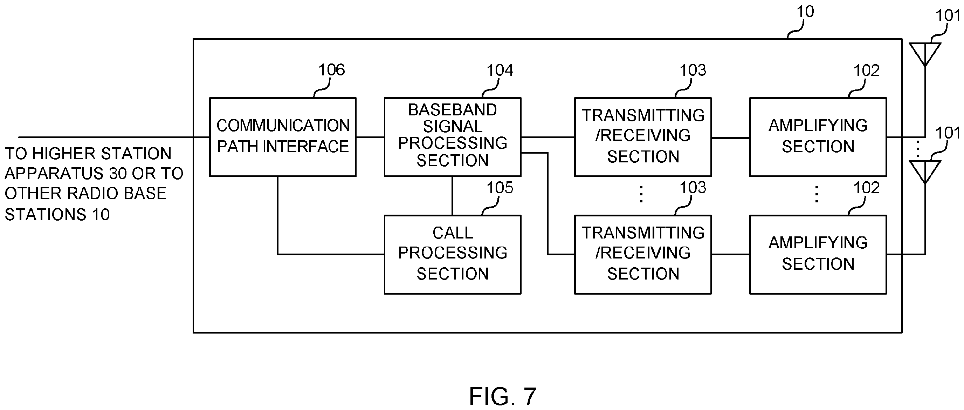

FIG. 7 is a diagram to show an example of an overall structure of the radio base station according to the present embodiment. A radio base station 10 includes a plurality of transmitting/receiving antennas 101, amplifying sections 102, transmitting/receiving sections 103, a baseband signal processing section 104, a call processing section 105, and a communication path interface 106. Note that the radio base station 10 may be configured to include one or more transmitting/receiving antennas 101, one or more amplifying sections 102, and one or more transmitting/receiving sections 103.

User data to be transmitted from the radio base station 10 to the user terminal 20 by the DL is input from the higher station apparatus 30 to the baseband signal processing section 104, via the communication path interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101.

The transmitting/receiving sections 103 can be constituted with transmitters/receivers, transmitting/receiving circuits, or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

Meanwhile, as for UL signals, radio frequency signals that are received in the transmitting/receiving antennas 101 are amplified in the amplifying sections 102. The transmitting/receiving sections 103 receive the UL signals amplified in the amplifying sections 102. The transmitting/receiving sections 103 convert the received signals into the baseband signals through frequency conversion and output to the baseband signal processing section 104.

In the baseband signal processing section 104, UL data included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing, such as setting up and releasing for communication channels, manages the state of the radio base station 10, and manages the radio resources.

The communication path interface 106 transmits and/or receives signals to and/or from the higher station apparatus 30 via a certain interface. The communication path interface 106 may transmit and/or receive signals (backhaul signaling) with adjacent radio base stations 10 via an inter-base station interface (for example, means in compliance with the CPRI (Common Public Radio Interface) such as an optical fiber, an X2 interface, and so on).

The transmitting/receiving sections 103 transmit DL signals (each including at least one of a DL data signal, a DL control signal (DCI), a DL reference signal, system information (for example, RMSI, SIB, or MIB)) to the user terminals 20 and receive UL signals (each including at least one of a UL data signal, a UL control signal, and a UL reference signal) from the user terminals 20.

The transmitting/receiving sections 103 each receive UCI from the user terminals 20 by using an uplink shared channel (for example, PUSCH) or an uplink control channel (for example, a short PUCCH and/or a long PUCCH). The UCI may include at least one of an HARQ-ACK, CSI, SR, beam identification information (for example, a beam index (BI)), and a buffer status report (BSR) of a DL data channel (for example, PDSCH).

The transmitting/receiving sections 103 may each receive uplink control information (or uplink control channel) by using an uplink control channel. The transmitting/receiving sections 103 may each transmit at least one of configuration information related to an uplink control channel, interlace structure information, frequency hopping information, and DCI.

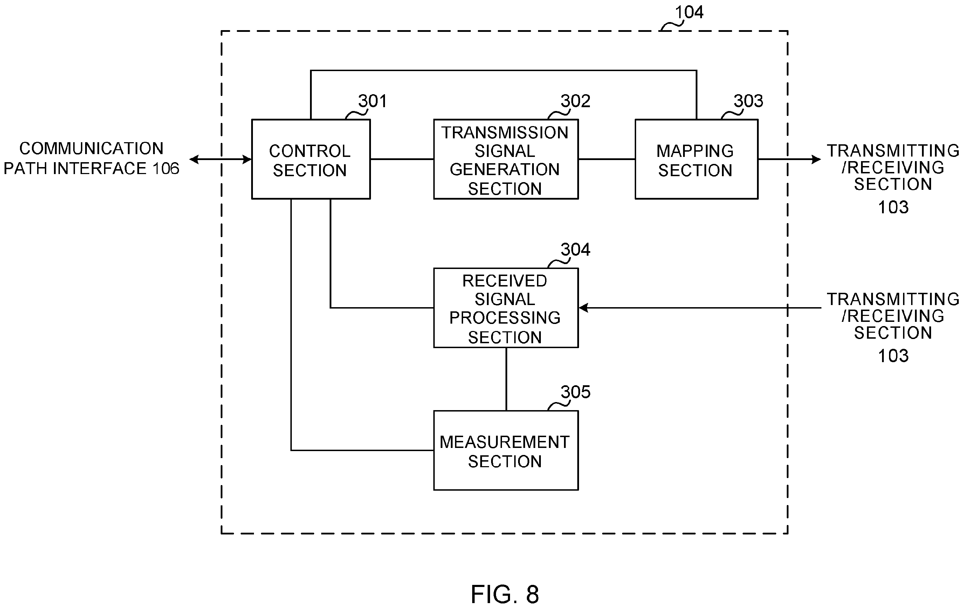

FIG. 8 is a diagram to show an example of a functional structure of the radio base station according to the present embodiment. Note that FIG. 8 primarily shows functional blocks that pertain to characteristic parts of the present embodiment, and it is assumed that the radio base station 10 may include other functional blocks that are necessary for radio communication as well. As shown in FIG. 8, the baseband signal processing section 104 includes a control section 301, a transmission signal generation section 302, a mapping section 303, a received signal processing section 304, and a measurement section 305.

The control section 301 controls the whole of the radio base station 10. The control section 301, for example, controls the generation of DL signals by the transmission signal generation section 302, the mapping of DL signals by the mapping section 303, receiving processes (for example, demodulation and the like) of UL signals by the received signal processing section 304, and the measurement by the measurement section 305.

Specifically, the control section 301 performs scheduling for the user terminals 20. Specifically, the control section 301 may perform scheduling and/or retransmission control of DL data and/or uplink shared channels, based on UCI (for example, CSI and/or BI) from the user terminals 20.

The control section 301 may control the structure (format) of an uplink control channel (for example, a long PUCCH and/or a short PUCCH) to perform such control as to transmit configuration information (for example, at least one of the positions and the number of frequency resources, period, cyclic shift (CS) index, and whether or not to employ interlaced transmission).

The control section 301 may control allocation of frequency resources distributed in a certain bandwidth to the uplink control channel.

The control section 301 may control the received signal processing section 304 to perform receiving processes of UCI from each user terminal 20, based on the format of the uplink control channel. The control section 301 may control demodulation of the uplink control channel by using a DMRS.

The control section 301 can be constituted with a controller, a control circuit, or control apparatus that can be described based on general understanding of the technical field to which the present invention pertains.

The transmission signal generation section 302 generates DL signals (including DL data signals, DL control signals, and DL reference signals) based on instruction from the control section 301 and outputs the DL signals to the mapping section 303.

The transmission signal generation section 302 can be a signal generator, a signal generation circuit, or signal generation apparatus that can be described based on general understanding of the technical field to which the present invention pertains.

The mapping section 303 maps the DL signals generated in the transmission signal generation section 302 to certain radio resources, based on instruction from the control section 301, and outputs these to the transmitting/receiving sections 103. The mapping section 303 can be a mapper, a mapping circuit, or mapping apparatus that can be described based on general understanding of the technical field to which the present invention pertains.

The received signal processing section 304 performs receiving processes (for example, demapping, demodulation, decoding, and so on) on UL signals (including, for example, UL data signals, UL control signals, and UL reference signals) transmitted from the user terminals 20. Specifically, the received signal processing section 304 may output the received signals and the signals after the receiving processes to the measurement section 305. The received signal processing section 304 performs receiving processes of UCI, based on an uplink control channel structure instructed from the control section 301.

The measurement section 305 conducts measurements with respect to the received signals. The measurement section 305 can be constituted with a measurer, a measurement circuit, or measurement apparatus that can be described based on general understanding of the technical field to which the present invention pertains.

The measurement section 305 may, for example, measure a channel quality of the UL, based on a received power (for example, RSRP (Reference Signal Received Power)) and/or a received quality (for example, RSRQ (Reference Signal Received Quality)) of each UL reference signal. The measurement results may be output to the control section 301.

### <User Terminal>

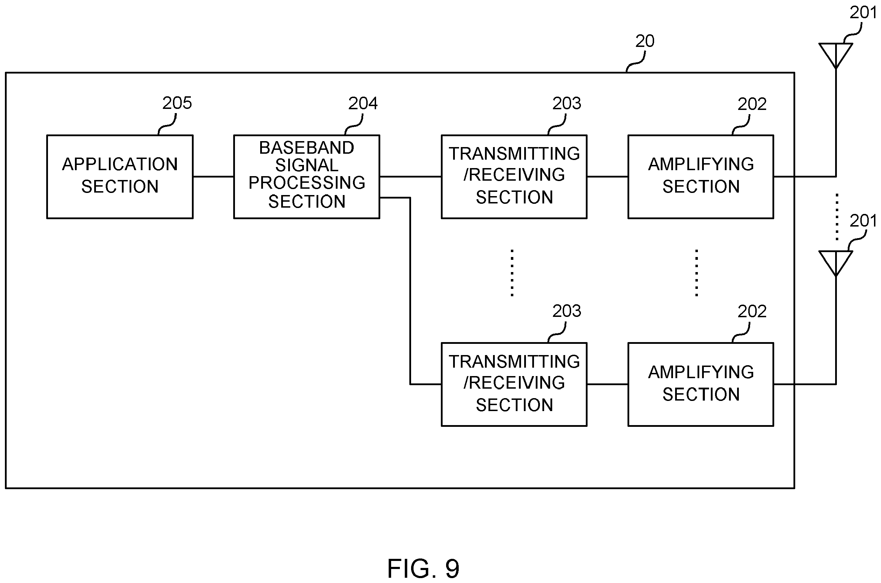

FIG. 9 is a diagram to show an example of an overall structure of a user terminal according to the present embodiment. The user terminal 20 includes a plurality of transmitting/receiving antennas 201 for MIMO transmission, amplifying sections 202, transmitting/receiving sections 203, a baseband signal processing section 204, and an application section 205.

Radio frequency signals that are received in the plurality of transmitting/receiving antennas 201 are amplified in the amplifying sections 202. The transmitting/receiving sections 203 receive the DL signals amplified in the amplifying sections 202. The transmitting/receiving sections 203 convert the received signals into baseband signals through frequency conversion, and output the baseband signals to the baseband signal processing section 204.

The baseband signal processing section 204 performs, on each input baseband signal, an FFT process, error correction decoding, a retransmission control receiving process, and so on. The DL data is forwarded to the application section 205. The application section 205 performs processes related to higher layers above the physical layer and the MAC layer, and so on. Broadcast information is also forwarded to the application section 205.

Meanwhile, the UL data is input from the application section 205 to the baseband signal processing section 204. The baseband signal processing section 204 performs a retransmission control transmission process (for example, an HARQ transmission process), channel coding, rate matching, puncturing, a discrete Fourier transform (DFT) process, an IFFT process, and so on, and the result is forwarded to each transmitting/receiving section 203. The baseband signal processing section 204 also performs at least one of channel coding, rate matching, puncturing, a DFT process, and an IFFT process on UCI, and the result is forwarded to each transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202 and transmitted from the transmitting/receiving antennas 201.

The transmitting/receiving sections 203 receive DL signals (including at least one of DL data signals, DL control signals (DCI), DL reference signals, system information (for example, RMSI, SIB, or MIB)) to the user terminals 20 and transmit UL signals (including at least one of UL data signals, UL control signals, and UL reference signals) from the user terminals 20.

The transmitting/receiving sections 203 each transmit UCI to the radio base station 10 by using an uplink shared channel (for example, PUSCH) or an uplink control channel (for example, a short PUCCH and/or a long PUCCH).

The transmitting/receiving sections 203 may each transmit uplink control information by using an uplink control channel. The transmitting/receiving sections 203 may each receive at least one of configuration information related to an uplink control channel, interlace structure information, frequency hopping information, and DCI.

The transmitting/receiving sections 203 can be transmitters/receivers, transmitting/receiving circuits, or transmitting/receiving apparatus that can be described based on general understanding of the technical field to which the present invention pertains. Each transmitting/receiving section 203 may be structured as a transmitting/receiving section in one entity, or may be constituted with a transmitting section and a receiving section.

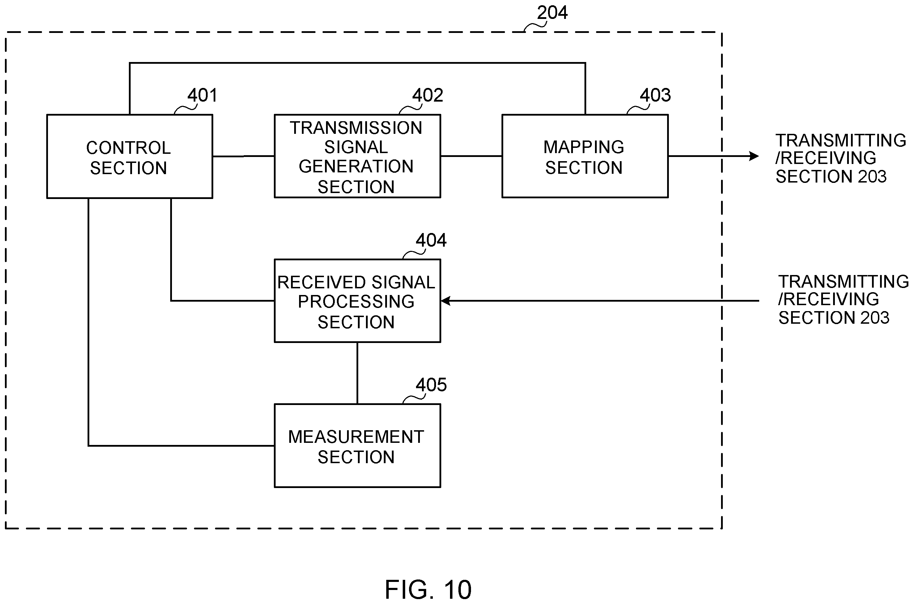

FIG. 10 is a diagram to show an example of a functional structure of a user terminal according to the present embodiment. Note that FIG. 10 primarily shows functional blocks that pertain to characteristic parts of the present embodiment, and it is assumed that the user terminal 20 includes other functional blocks that are necessary for radio communication as well. As shown in FIG. 10, the baseband signal processing section 204 provided in the user terminal 20 includes a control section 401, a transmission signal generation section 402, a mapping section 403, a received signal processing section 404, and a measurement section 405.

The control section 401 controls the whole of the user terminal 20. The control section 401, for example, controls the generation of UL signals by the transmission signal generation section 402, the mapping of UL signals by the mapping section 403, receiving processes of DL signals by the received signal processing section 404, and the measurement by the measurement section 405.

The control section 401 controls an uplink control channel to be used for transmission of UCI from the user terminal 20, based on an explicit instruction from the radio base station 10 or implicit determination in the user terminal 20.

The control section 401 may control the structure (format) of an uplink control channel (for example, a long PUCCH and/or a short PUCCH) to be transmitted on a carrier for which listening is performed before transmission (unlicensed carrier). The control section 401 may control the format of the uplink control channel, based on information from the radio base station 10.

The control section 401 may determine a PUCCH resource to be used for transmission of UCI, based on at least one of information transmitted by higher layer signaling, downlink control information, and an implicit value.

The control section 401 may determine frequency resources that are to be allocated to an uplink control channel transmitted on a carrier for which listening is performed before transmission (unlicensed carrier) and distributed in a certain bandwidth.

The frequency resources distributed in the certain bandwidth may include one or more interlaces, and each interlace may include a plurality of resource blocks allocated at certain frequency spacing in the certain bandwidth (first and third aspects).

The uplink control channel to which one or more interlaces are allocated may be an uplink control channel (short PUCCH) of a second period shorter than a first period (first aspect). The uplink control channel may be both an uplink control channel (short PUCCH) of a second period shorter than a first period and an uplink control channel (long PUCCH) of the first period (third aspect).

The frequency resources distributed in the certain bandwidth may be frequency resources that frequency-hop at the number of hops greater than two (second aspect). The uplink control channel to which the frequency resources are allocated may be an uplink control channel (long PUCCH) of the first period longer than a second period.

The control section 401 may determine the frequency resources, based on downlink control information from the radio base station 10.

The uplink control channel may be an uplink control channel (long PUCCH) of a second period longer than a first period. The frequency resources distributed in the certain bandwidth may be frequency resources that frequency-hop at the number of hops greater than two (second aspect).

The control section 401 can be constituted with a controller, a control circuit, or control apparatus that can be described based on general understanding of the technical field to which the present invention pertains.

The transmission signal generation section 402 generates UL signals (including UL data signals, UL control signals, UL reference signals, and UCI), based on instruction from the control section 401 (through, for example, coding, rate matching, puncturing, demodulation, or the like) and outputs the UL signals to the mapping section 403. The transmission signal generation section 402 can be a signal generator, a signal generation circuit, or signal generation apparatus that can be described based on general understanding of the technical field to which the present invention pertains.

The mapping section 403 maps the UL signals generated in the transmission signal generation section 402 to radio resources, based on instruction from the control section 401, and outputs the result to the transmitting/receiving sections 203. The mapping section 403 can be a mapper, a mapping circuit, or mapping apparatus that can be described based on general understanding of the technical field to which the present invention pertains.

The received signal processing section 404 performs receiving processes (for example, demapping, demodulation, decoding, and so on) on DL signals (DL data signals, scheduling information, DL control signals, and DL reference signals). The received signal processing section 404 outputs the information received from the radio base station 10 to the control section 401. The received signal processing section 404 outputs, for example, broadcast information, system information, higher layer control information by higher layer signaling such as RRC signaling, physical layer control information (L1/L2 control information), and so on, to the control section 401.

The received signal processing section 404 can be a signal processor, a signal processing circuit, or signal processing apparatus that can be described based on general understanding of the technical field to which the present invention pertains. The received signal processing section 404 can constitute the receiving section according to the present invention.

The measurement section 405 measures a channel state, based on a reference signal (for example, a CSI-RS) from the radio base station 10 and outputs a measurement result to the control section 401. Note that the measurement of a channel state may be performed for each CC.

The measurement section 405 can be constituted with a signal processor, a signal processing circuit, or signal processing apparatus, and a measurer, a measurement circuit, or measurement apparatus that can be described based on general understanding of the technical field to which the present invention pertains.

### <Hardware Structure>

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

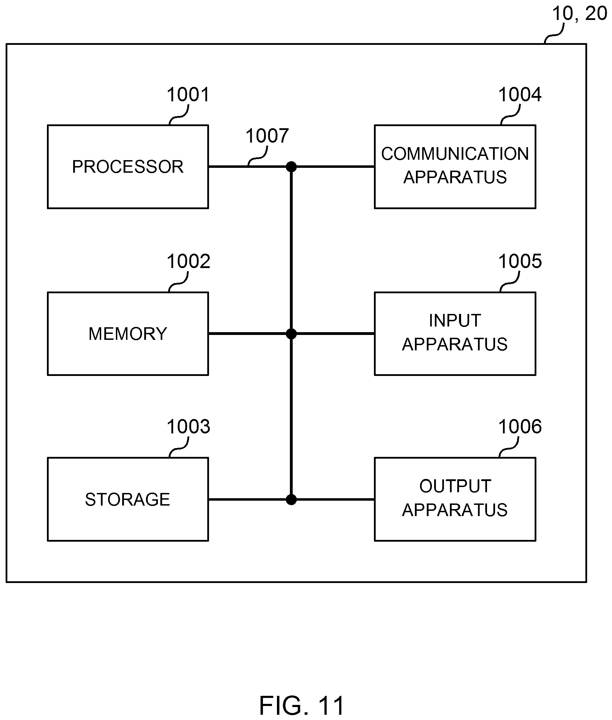

For example, a radio base station, a user terminal, and so on according to one embodiment of the present invention may function as a computer that executes the processes of the radio communication method of the present invention. FIG. 11 is a diagram to show an example of a hardware structure of the radio base station and the user terminal according to one embodiment of the present invention. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or more of each apparatus shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control reading and/or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present invention.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disc), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via a wired and/or wireless network, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in this specification and/or the terminology that is needed to understand this specification may be replaced by other terms that convey the same or similar meanings. For example, "channels" and/or "symbols" may be "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks, and/or codewords are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to certain values, or may be represented in another corresponding information. For example, radio resources may be specified by certain indices.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers, and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (master information block (MIB), system information blocks (SIBs), and so on), MAC (Medium Access Control) signaling), and other signals or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean commands, command sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" used in this specification can be used interchangeably.

In the present specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmitting point," "receiving point," "transmitting/receiving point," "femto cell," "small cell," and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads)). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms.

A base station and/or a mobile station may be referred to as "transmitting apparatus," "receiving apparatus," and so on.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up, (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In this specification, when two elements are connected, the two elements may be considered "connected" or "coupled" to each other by using one or more electrical wires, cables and/or printed electrical connections, and, as some non-limiting and non-inclusive examples, by using electromagnetic energy having wavelengths in radio frequency regions, microwave regions and/or (both visible and invisible) optical regions, or the like.

In this specification, the phrase "A and B are different" may mean that "A and B are different from each other." The terms "separate," "be coupled" and so on may be interpreted similarly.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described in this specification. The present invention can be implemented with various corrections and in various modifications, without departing from the spirit and scope of the present invention defined by the recitations of claims. Consequently, the description in this specification is provided only for the purpose of explaining examples, and should by no means be construed to limit the present invention in any way.

## Claims

1. A user terminal comprising:
a transmitting section that transmits an uplink control channel in a carrier for which listening is performed before transmission; and
a control section that determines frequency resources that are to be allocated to the uplink control channel and distributed in a certain bandwidth.

2. The user terminal according to claim 1, wherein
the frequency resources include one or more interlaces, and each interlace includes a plurality of resource blocks allocated at certain frequency spacing in the certain bandwidth.

3. The user terminal according to claim 2, wherein the uplink control channel is an uplink control channel of a second period shorter than a first period.

4. The user terminal according to claim 2, wherein the uplink control channel is both an uplink control channel of a second period shorter than a first period and an uplink control channel of the first period.

5. The user terminal according to claim 1, wherein
the uplink control channel is an uplink control channel of a first period longer than a second period, and
the frequency resources are frequency resources that frequency-hop at the number of hops greater than two.

6. A radio base station comprising:
a receiving section that receives an uplink control channel in a carrier for which listening is performed before transmission; and
a control section that controls allocation of frequency resources distributed in a certain bandwidth to the uplink control channel.
